**Europäisches Patentamt**

**European Patent Office**

**Office européen des brevets**

(19)

(11) Veröffentlichungsnummer: **0 415 159 B1**

(12) **EUROPÄISCHE PATENTSCHRIFT**

(45) Veröffentlichungstag der Patentschrift: **21.09.94**

(21) Anmeldenummer: **90115463.3**

(22) Anmeldetag: **11.08.90**

Die Akte enthält technische Angaben, die nach dem Eingang der Anmeldung eingereicht wurden und die nicht in dieser Patentschrift enthalten sind.

(51) Int. Cl.⁵: **C08G 18/10**, C08G 18/12, C08G 18/80, C08G 18/76, C08G 18/28, //(C08G18/10, 101:00)

(54) **Flüssige Polyisocyanatgemische, ein Verfahren zu ihrer Herstellung und ihrer Verwendung bei der Herstellung von Polyurethanschaumstoffen.**

(30) Priorität: **26.08.89 DE 3928330**

(43) Veröffentlichungstag der Anmeldung:
**06.03.91 Patentblatt 91/10**

(45) Bekanntmachung des Hinweises auf die Patenterteilung:
**21.09.94 Patentblatt 94/38**

(84) Benannte Vertragsstaaten:
**BE DE ES FR GB IT NL SE**

(56) Entgegenhaltungen:
GB-A- 2 066 813
US-A- 4 386 032
US-A- 4 490 302

(73) Patentinhaber: **BAYER AG**

**D-51368 Leverkusen (DE)**

(72) Erfinder: **Gebauer, Herbert, Dr.**
**Franz-Stollwerck-Strasse 22**
**D-4150 Krefeld 11 (DE)**
Erfinder: **Gupta, Pramod, Dr.**
**Langemarckstrasse 27**
**D-5012 Bedburg (DE)**
Erfinder: **Heilig, Gerhard, Dr.**
**Drosselweg 40**
**D-5060 Bergisch Gladbach 2 (DE)**
Erfinder: **Wiedermann, Rolf, Dr.**
**Wiesenstrasse 18**
**D-5068 Odentahl-Vois-Winkel (DE)**

**Beschreibung**

Die Erfindung betrifft neue urethanmodifizierte Polyisocyanatgemische der Diphenylmethanreihe, ein Verfahren zu ihrer Herstellung durch Umsetzung von Polyisocyanaten oder Polyisocyanatgemischen der Diphenylmethanreihe mit bestimmten ein- und/oder mehrwertigen Alkoholen und gegebenenfalls anschließende Abmischung der Modifizierungsprodukte mit urethangruppenfreien Polyisocyanaten oder Polyisocyanatgemischen der Diphenylmethanreihe und die Verwendung der Polyisocyanatgemische bei der Herstellung von Polyurethanschaumstoffen, insbesondere Polyurethan-Hartschaumstoffen.

Zur Herstellung von Polyurethanschaumstoffen, insbesondere von Polyurethan-Hartschaumstoffen verwendet man seit langen Jahren als Polyisocyanatkomponente Polyisocyanate bzw. Polyisocyanatgemische der Diphenylmethanreihe.

Der Begriff "Polyisocyanat der Diphenylmethanreihe" stellt den Oberbegriff für alle Di- und Polyisocyanate dar, die bei der Phosgenierung von Anilin/Formaldehyd-Kondensaten entstehen und in den Phosgenierungsprodukten als Gemisch vorliegen. Der Begriff "Polyisocyanatgemisch der Diphenylmethanreihe" umfaßt beliebige Gemische von "Polyisocyanaten der Diphenylmethanreihe", d.h. sowohl die genannten Phosgenierungsprodukte von Anilin/Formaldehyd-Kondensaten als auch solche Gemische, wie sie durch Abmischung einzelner "Polyisocyanate der Diphenylmethanreihe" und/oder unterschiedlicher Mischungen hiervon entstehen, als auch solche Gemische von "Polyisocyanaten der Diphenylmethanreihe" wie sie durch partielle Destillation von Phosgenierungsprodukten von Anilin/Formaldehyd-Kondensaten als Destillat bzw. Destillationsrückstand anfallen.

Für die Herstellung von harten Polyurethanschaumstoffen verwendet man vorzugsweise Polyisocyanatgemische der Diphenylmethanreihe, die eine durchschnittliche NCO-Funktionalität von ca. 2 bis 3,1 und einer Viskosität bei 25°C von ca. 50 bis 2000 mPa.s, vorzugsweise 100 bis 700 mPa.s aufweisen.

Polyurethan-Hartschaumstoffe, die zur Wärmeisolation verwendet werden wurden bislang aus derartigen Polyisocyanatgemischen der Diphenylmethanreihe, geeigneten Polyhydroxylverbindungen, Treibmitteln und weiteren Hilfs- und Zusatzmitteln hergestellt, wobei als Treibmittel Wasserstoff-freie "Fluorchlorkohlenwasserstoffe" wie beispielsweise Monochlortrifluormethan oder Dichlordifluormethan wegen ihrer niedrigen Wärmeleitfähigkeit und ihrer guten Verträglichkeit mit den Ausgangsmaterialien Verwendung fanden.

Die Wärmeleitfähigkeit und somit die Wärmedämmung von Polyurethanschaumstoffen hängt nicht nur von der Wärmeleitfähigkeit des die geschlossenen Zellen füllenden Treibgases sondern auch vom Durchmesser der Polyurethanzellen ab. Je kleiner der Durchmesser und je gleichmäßiger die Zellstruktur, desto niedriger ist die Wärmeleitfähigkeit des Schaumstoffes. Die Verwendung von "alternativen" Treibmitteln wie insbesondere niedrigsiedenden Kohlenwasserstoffen (z.B. Propan, Butan oder Pentan) und/oder wasserstoffhaltigen Fluorchlorkohlenwasserstoffen (insbesondere Monochlordifluormethan) und/oder Wasser ist mit der Schwierigkeit behaftet, daß diese Treibmittel in den üblichen Rezepturen zu vergleichsweise großen Zelldurchmessern und im übrigen unregelmäßigen Zellstrukturen führen können, wobei die Schaumstoffe im übrigen zur Bildung von ungleichmäßigen Deckschichten neigen.

Überraschenderweise wurde jetzt gefunden, daß bestimmte Urethan-modifizierte Polyisocyanatgemische der nachstehend näher beschriebenen Art auf Basis von Polyisocyanatgemischen der Diphenylmethanreihe und bestimmten ein- und/oder mehrwertigen Alkoholen ausgezeichnete Ausgangsmaterialien zur Herstellung von Polyurethanschaumstoffen, insbesondere Polyurethan-Hartschaumstoffen darstellen, die auch bei Verwendung von "alternativen" Treibmitteln der genannten Art, insbesondere von wasserstoffhaltigen Fluorchlorkohlenwasserstoffen und/oder von niedrigsiedenden aliphatischen Kohlenwasserstoffen und/oder Wasser die Herstellung von feinzelligen Schaumstoffen mit geschlossenen Zellen gestatten, die nicht mehr mit den genannten Nachteilen behaftet sind.

Gegenstand der Erfindung sind flüssige Urethangruppen enthaltende Polyisocyanatgemische mit einem NCO-Gehalt von 25 bis 33 Gew.-% und einer Viskosität von 100 bis 3000 mPa.s bei 25°C, erhalten durch Umsetzung von

a1) Polyisocyanaten oder Polyisocyanatgemischen der Diphenylmethan-Reihe mit einem Gehalt an Diisocyanatdiphenylmethan-Isomeren von 30 bis 100 Gew.-% mit

b) mindestens einem Alkohol in einem Mengenverhältnis von a1) und b) entsprechend einem NCO/OH-Äquivalentverhältnis von 1 : 0,01 bis 1 : 0,5 und bei Temperaturen von 40 - 180°C und ohne Katalysatoren

und gegebenenfalls anschließende Abmischung des aus den Komponenten a1) und b) erhaltenen Umsetzungsproduktes bei Raumtemperatur mit

a2) urethangruppenfreien Polyisocyanaten oder Polyisocyanatgemischen der Diphenylmethanreihe mit einem Gehalt an Diisocyanatodiphenylmethan-Isomoren von 30 bis 100 Gew.-%,

2

mit der Maßgabe, daß der Gehalt der Komponenten a1) und a2) an Diisocyantodiphenylmethan-Isomeren insgesamt bei 30 bis 90 Gew.-% und der Gehalt der beiden Ausgangskomponenten an höher als difunktionellen Polyisocyanaten der Diphenylmethanreihe insgesamt bei 10 bis 70 Gew.-% liegt, dadurch gekennzeichnet, daß die Komponente b) aus

b1) Alkoxylierungsprodukten von Alkoholen der Formel

R-OH

und/oder

b2) Alkoxylierungsprodukten von Aminen der Formel

$R-NH_2$

und/oder

b3) Alkoxylierungsprodukten von Amiden der Formel

$R-CO-NH_2$

und gegebenenfalls zusätzlich

b4) keine hydrophoben Kohlenwasserstoffreste -R aufweisenden Alkoxylierungsprodukten von ein- oder mehrfunktionellen Startermolekülen des Molekulargewichtsbereichs 18 bis 342

besteht, wobei

(i) die in den Komponenten b1), b2) und b3) vorliegenden Reste R gleich oder verschieden sind und für gegebenenfalls olefinisch ungesättigte aliphatische Kohlenwasserstoffreste mit 8 bis 24 Kohlenstoffatomen stehen,

(ii) bei der Herstellung der Alkoxylierungsprodukte pro Mol an aktiven Wasserstoffatomen der Startermoleküle mindestens 1 Mol Alkylenoxid zur Anwendung gelangt,

(iii) das mittlere Molekulargewicht $M_n$ der Komponente b) bei 188 bis 1200 liegt,

(iv) Art und Mengenverhältnisse der Komponenten b1) bis b4) im übrigen so gewählt werden, daß in der Komponente b) der Gewichtsanteil der hydrophoben Reste -R 5 bis 82 Gew.-%, ausmacht und

(v) Art und Mengenverhältnisse der Komponenten b1) bis b4) so gewählt werden, daß die Komponente b eine mittlere Funktionalität von mindestens 1,3, vorzugsweise 1,5 - 5 aufweist.

Gegenstand der Erfindung ist auch ein Verfahren zur Herstellung derartiger Urethangruppen enthaltender Polyisocyanatgemische durch Umsetzung von

a1) Polyisocyanaten oder Polyisocyanatgemischen der Diphenylmethan-Reihe mit einem Gehalt an Diisocyanatdiphenylmethan-Isomeren von 30 bis 100 Gew.-%.

mit

b) mindestens einem Alkohol in einem Mengenverhältnis von a1) und b) entsprechend einem NCO/OH-Äquivalentverhältnis von 1 : 0,01 bis 1 : 0,5 und bei Temperaturen von 40 - 180° C und ohne Katalysatoren

und gegebenenfalls anschließende Abmischung des aus den Komponenten a1) und b) erhaltenen Umsetzungsproduktes bei Raumtemperatur mit

a2) urethangruppenfreien Polyisocyanaten oder Polyisocyanatgemischen der Diphenylmethanreihe mit einem Gehalt an Diisocyanatodiphenylmethan-Isomeren von 30 bis 100 Gew.-%,

mit der Maßgabe, daß der Gehalt der Komponenten a1) und a2) an Diisocyantodiphenylmethan-Isomeren insgesamt bei 30 bis 90 Gew.-% und der Gehalt der beiden Ausgangskomponenten an höher als difunktionellen Polyisocyanaten der Diphenylmethanreihe insgesamt bei 10 bis 70 Gew.-% liegt, dadurch gekennzeichnet, daß die Komponente b) aus

b1) Alkoxylierungsprodukten von Alkoholen der Formel

R-OH

und/oder

b2) Alkoxylierungsprodukten von Aminen der Formel

$R-NH_2$

und/oder

EP 0 415 159 B1

b3) Alkoxylierungsprodukten von Amiden der Formel

R-CO-NH$_2$

und gegebenenfalls zusätzlich
b4) keine hydrophoben Kohlenwasserstoffreste -R aufweisenden Alkoxylierungsprodukten von ein- oder mehrfunktionellen Startermolekülen des Molekulargewichtsbereichs 18 bis 342
besteht, wobei
(i) die in den Komponenten b1), b2) und b3) vorliegenden Reste R gleich oder verschieden sind und für gegebenenfalls olefinisch ungesättigte aliphatische Kohlenwasserstoffreste mit 8 bis 24 Kohlenstoffatomen stehen,
(ii) bei der Herstellung der Alkoxylierungsprodukte pro Mol an aktiven Wasserstoffatomen der Startermoleküle mindestens 1 Mol Alkylenoxid zur Anwendung gelangt,
(iii) das mittlere Molekulargewicht M$_n$ der Komponente b) bei 188 bis 1200 liegt,
(iv) Art und Mengenverhältnisse der Komponenten b1) bis b4) im übrigen so gewählt werden, daß in der Komponente b) der Gewichtsanteil der hydrophoben Reste -R 5 bis 82 Gew.-% ausmacht und
(v) Art und Mengenverhältnisse der Komponenten b1) bis b4) so gewählt werden, daß die Komponente b eine mittlere Funktionalität von mindestens 1,3, vorzugsweise 1,5 - 5 aufweist.
Gegenstand der Erfindung ist schließlich auch die Verwendung dieser Polyisocyanatgemische als Polyisocyanatkomponente bei der Herstellung von Polyurethanschaumstoffen, insbesondere von Polyurethan-Hartschaumstoffen.
Die erfindungsgemäßen Polyisocyanatgemische weisen einen NCO-Gehalt von 25 bis 33 Gew.-%, vorzugsweise 27 bis 32,5 Gew.-% und bei 25°C eine Viskosität von 100 bis 3000 mPa.s, vorzugsweise 150 bis 2000 mPa.s, auf.
Die erfindungsgemäßen Polyisocyanatgemische stellen entweder Umsetzungsprodukte der nachstehend beschriebenen Komponenten a1) und b) oder Abmischungen derartiger Umsetzungsprodukte mit der nachstehend beschriebenen Komponente a2) dar. Der Anteil der Abmischkomponente a2) in den erfindungsgemäßen Polyisocyanatgemischen kann 0 - 500, vorzugsweise 0 - 300 Gew.-% betragen. Im übrigen werden bei der Durchführung des erfindungsgemäßen Verfahrens zur Herstellung der Polyisocyanatgemische Art und Mengenverhältnis der genannten Ausgangsmaterialien im Rahmen der vor- und nachstehend gemachten Offenbarung so gewählt, daß in den erfindungsgemäßen Gemischen insgesamt, d.h. in modifizierter und unmodifizierter Form, 30 - 90, vorzugsweise 35 - 55 Gew.-% an Diisocyanatodiphenylmethan-Isomerenund 10 - 70, vorzugsweise 45 - 65 Gew.-% an höher als difunktionellen Polyisocyanaten der Diphenylmethanreihe vorliegen. Hierbei beziehen sich die genannten Prozentsätze auf die Gesamtmenge der modifizierten und unmodifizierten Polyisocyanate der Diphenylmethanreihe ohne Einbeziehung des Gewichts der Komponente b). Die in den erfindungsgemäßen Gemischen modifiziert und unmodifiziert vorliegenden Diisocyanatodiphenylmethan-Isomeren bestehen vorzugsweise zu 25 bis 99,5 Gew.-% aus 4,4'-, zu 0,5 bis 25 Gew.-% aus 2,4'- und maximal zu 3 Gew.-% aus 2,2'-Diisocyanatodiphenylmethan.
Als Ausgangskomponente a1) eignen sich im Prinzip alle beliebigen Polyisocyanate oder Polyisocyanatgemische der Diphenylmethanreihe mit einem Gehalt an Diisocyanatodiphenylmethan-Isomeren von 30 - 100 Gew.-%. Gut geeignet sind insbesondere solche Polyisocyanatgemische der Diphenylmethanreihe, die einen Gehalt an Diisocyantodiphenylmethan-Isomeren von 30 - 90 Gew.-% aufweisen und zum Rest aus höherfunktionellen Polyisocyanaten der Diphenylmethanreihe bestehen oder auch Diisocyanatodiphenylmethan-Isomere bzw. Isomerengemische, die keine höherfunktionellen Polyisocyanate enthalten. Als Komponente a1) kommen demzufolge reines 4,4'-Diisocyanatodiphenylmethan, Gemische aus 60 - 99,5 Gew.-% dieses Diisocyanates mit 0,5 - 40 Gew.-% 2,4'-Diisocyanatodiphenylmethan und 0 -3 Gew.-% 2,2'-Diisocyanatodiphenylmethan und insbesondere Gemische dieser Diisocyanate bzw. Diisocyanatgemische mit bis zu 70, vorzugsweise bis zu 60 Gew.-%, bezogen auf Gesamtgemisch, an höherfunktionellen Polyisocyanaten der Diphenylmethanreihe in Betracht.
Die Komponente b) besteht aus mindestens einem Alkohol ausgewählt aus der Gruppe der nachstehend unter b1), b2) und b3) genannten Alkohole und gegebenenfalls zusätzlich aus mindestens einem Alkohol der nachstehend unter b4) genannten Art.
Bei den Alkoholen b1) handelt es sich um einwertige Polyetheralkohole, wie sie durch Alkoxylierung von einwertigen Alkoholen der Formel

R-OH

zugänglich sind, wobei

4

R  für einen gegebenenfalls olefinisch ungesättigten aliphatischen Kohlenwasserstoffrest mit 8 bis 24, vorzugsweise 12 bis 18 Kohlenstoffatomen steht, und wobei die funktionelle Gruppe, hier die Hydroxylgruppe, des Startermoleküls vorzugsweise an ein primäres Kohlenstoffatom gebunden ist.

Typische Beispiele von geeigneten Startermolekülen zur Herstellung von Alkoholen b1) sind beispielsweise Octanol, Isononylalkohol, Decanol, Dodecanol, Octadecanol, Stearylalkohol, Oleylalkohol oder Cetylalkohol. Bei der Alkoxylierungsreaktion werden als Alkylenoxide entweder Propylenoxid und/oder 1,2-Butylenoxid oder zusätzlich zu diesen Alkylenoxiden Ethylenoxid verwendet, wobei letzteres entweder im Gemisch mit Propylenoxid und/oder 1,2-Butylenoxid und/oder in einem separaten Reaktionsschritt bei der Alkoxylierungsreaktion zum Einsatz gelangt. Auch Propylenoxid bzw. 1,2-Butylenoxid können im Gemisch oder in separaten Reaktionsschritten verwendet werden. Ethylenoxid kommt hierbei, falls überhaupt, maximal in einer Menge von 50, vorzugsweise maximal 30 Mol-%, bezogen auf die Gesamtmenge der eingesetzten Alkylenoxide zum Einsatz. Selbstverständlich können bei der Herstellung der einwertigen Polyetheralkohole auch Gemische der beispielhaft genannten einwertigen Startermoleküle eingesetzt werden. Bei der Alkoxylierungsreaktion werden pro Mol an aktiven Wasseratomen des Starters, hier des Alkohols, mindestens 1,0, vorzugsweise mindestens 1,5 Mol Alkylenoxid zur Reaktion gebracht.

Bei den Alkoholen b2) handelt es sich um zweiwertige Alkohole, wie sie durch Alkoxylierung von Aminen der Formel

$R-NH_2$

zugänglich sind, wobei

R bezüglich seiner Bedeutung der obengemachtenDefinition entspricht, jedoch mit dem Rest R der oben unter b1) genannten Alkohole nicht identisch zu sein braucht. Typische Beispiele für geeignete primäre Amine sind Octylamin, Dodecylamin, Octadecylamin, Stearylamin, Oleylamin oder Cetylamin. Selbstverständlich können auch beliebige Gemische derartiger primärer Amine bei der Alkoxylierungsreaktion eingesetzt werden. Im übrigen gelten die oben in Zusammenhang mit b1) gemachten Ausführungen bezüglich der zum Einsatz gelangenden Alkylenoxide und ihrer Mengen auch bezüglich der Alkohole b2).

Bei den Alkoholen b3) handelt es sich um Alkoxylierungsprodukte von Amiden der Formel

$R-CO-NH_2$

wobei

R  bezüglich seiner Bedeutung der Definition unter b1) entspricht mit den Resten R der Komponenten b1) und b2) jedoch nicht identisch zu sein braucht.

Typische Beispiele geeigneter Amide sind beispielsweise Octansäureamid, Dodecansäureamid, Ölsäureamid oder Stearinsäureamid. Auch hier können selbstverständlich Gemische der beispielhaft genannten Startermoleküle verwendet werden. Ebenso gelten auch hier die oben im Zusammenhang mit b1) gemachten Ausführungen bezüglich der Art und Mengenverhältnisse der zum Einsatz gelangenden Alkylenoxide.

Bei der in der Komponente b) gegebenenfalls zusätzlich mitverwendeten Alkoholkomponente b4) handelt es sich um beliebige ein- oder mehrwertige Etheralkohole, die keine hydrophoben Reste -R der oben beispielhaft genannten Art aufweisen. Vorzugsweise handelt es sich bei der Komponente b4) um mehrwertige Polyetherpolyole der aus der Polyurethanchemie an sich bekannten Art. Zur Herstellung von Polyetheralkoholen b4) geeignete Startermoleküle sind beispielsweise einwertige Alkohole wie Methanol, Ethanol oder n-Butanol oder vorzugsweise mindestens zwei im Sinne der Alkoxylierungsreaktion reaktive Wasserstoffatome aufweisende Verbindungen des Molekulargewichtsbereichs 18 bis 342 wie beispielsweise Wasser, Propylenglykol, Trimethylolpropan, Glycerin, Bisphenol A, Ethylendiamin, 2,3-Diaminotoluol, 4,4'-Diaminodiphenylmethan, Sorbit und/oder Saccharose. Die Komponente b4) kann auch aus einem Alkoxylierungsprodukt eines Gemischs derartiger Startermoleküle bestehen.

Bezüglich der Art und Menge der eingesetzten Alkylenoxide gelten auch hier die bereits oben im Zusammenhang mit der Komponente b1) gemachten Angaben.

Die Komponente b) besteht, wie bereits ausgeführt, entweder aus einer Einzelkomponente b1), b2) oder b3) oder aus einem Gemisch mehrerer derartiger Einzelkomponenten und/oder einem Gemisch aus einer oder mehrerer derartiger Einzelkomponenten mit mindestens einem Alkohol der unter b4) genannten Art. Im Falle der Verwendung von derartigen Gemischen können diese durch Abmischung der Einzelkomponenten oder aber auch, was oftmals bevorzugt ist, durch Alkoxylierung eines entsprechenden Startergemischs hergestellt werden.

Die Komponente b) weist eine mittlere Hydroxylfunktionalität von mindestens 1,3 und besonders bevorzugt von 1,5 bis 5 auf. Die mittlere Funktionalität stellt hierbei den Quotienten aus Anzahl der Mole Hydroxylgruppen dividiert durch Anzahl der Mole an ein- und mehrwertigen Alkoholen dar. Das Molekulargewicht bzw. das mittlere Molekulargewicht $M_n$ der Komponente b), das in bekannter Weise aus der mittleren Funktionalität und dem Hydroxylgruppengehalt berechnet werden kann, liegt bei 188 bis 1200, vorzugsweise 300 bis 800. Im übrigen muß bezüglich der Art und Mengenverhältnisse der Einzelkomponenten b1) bis b4) darauf geachtet werden, daß der Anteil an hydrophoben Kohlenwasserstoffresten -R in der Komponente b) 5 bis 82, vorzugsweise 10 bis 40 Gew.-% ausmacht.

Als gegebenenfalls mit dem Reaktionsprodukt aus a1) und b) abzumischende Polyisocyanatkomponente a2) kommen grundsätzlich Polyisocyanate oder Polyisocyanatgemische der Diphenylmethanreihe der bereits unter a1) genannten Art in Betracht, wobei selbstverständlich die Komponenten a1) und a2) nicht die gleiche Zusammensetzung aufweisen müssen. Vorzugsweise liegt der Gehalt der Komponente a2) an Diisocyanatodphenylmethan-Isomeren bei 35 bis 60 Gew.-%.

Bei der Durchführung des erfindungsgemäßen Verfahrens wird die Polyisocyanatkomponente a1) mit der Alkoholkomponente b) innerhalb des Temperaturbereichs von 40 - 180°C, vorzugsweise im Temperaturbereich von 60 - 120°C zur Reaktion gebracht, wobei die Mengenverhältnisse der Komponenten einem NCO/OH-Äquivalentverhältnis von 1:0,01 bis 1:0,5, vorzugsweise von 1:0,05 bis 1:0,3 entsprechen. Die Modifizierungsreaktion kann chargenweise oder gegebenenfalls kontinuierlich durch Zudosierung der Alkoholkomponente b) zu einem Strom der Polyisocyanatkomponente a1) erfolgen.

Die gegebenenfalls anschließende Abmischung des Umsetzungsproduktes aus a1) und b) mit der Polyisocyanatkomponente a2) erfolgt vorzugsweise durch einfaches Verrühren der Komponenten bei Raumtemperatur.

Bei der Durchführung des erfindungsgemäßen Verfahrens sind selbstverständlich Art und Mengenverhältnisse der Ausgangskomponenten im Rahmen der oben gemachten Offenbarung so zu wählen, daß die resultierenden erfindungsgemäßen Gemische den oben gemachten Angaben bezüglich NCO-Gehalt, sowie Isomeren- und Homologengehalt entsprechen.

Die erfindungsgemäßen Polyisocyanatgemische stellen wertvolle Ausgangsmaterialien zur Herstellung von Polyurethanschaumstoffen, insbesondere Polyurethan-Hartschaumstoffen dar. Sie werden hierzu anstelle der bislang eingesetzten Polyisocyanatgemische der Diphenylmethanreihe mit den üblichen Ausgangsmaterialien eingesetzt, wobei jedoch als Treibmittel vorzugsweise "alternative" Treibmittel zum Einsatz gelangen. Hierzu gehören neben niedrigsiedenden aliphatisch Kohlenwasserstoffen wie Propan und/oder Butan insbesondere Wasserstoff enthaltende Halogen-, d.h. insbesondere Fluorchlorkohlenwasserstoffe, wie beispielsweise 1,1-Difluor-1-chlor-ethan, 1,1,1-Trifluor-2-fluorethan, 1,1,1-Trifluor-2,2-dichlorethan, 1-Fluor-1,1-dichlorethan und insbesondere Monochlordifluormethan.

Diese "alternativen" Treibmittel werden bei der Herstellung der Schaumstoffe oftmals in Kombination mit Wasser als chemischem Treibmittel (Kohlendioxidbildung) verwendet. Wasser als alleiniges Treibmittel ist ebenfalls möglich.

Die nachfolgenden Beispiele dienen der weiteren Erläuterung der Erfindung, ohne diese zu beschränken. In den nachfolgenden Beispielen werden folgende Ausgangsmaterialien eingesetzt:

Polyisocyanat 1:

Polyisocyanatgemisch der Diphenylmethanreihe bestehend aus 90 Gew.-% Diisocyanatodiphenylmethan-Isomeren und 10 Gew.-% höherkernigen Polyisocyanaten der Diphenylmethanreihe (Zusammensetzung des Diisocyanat-Anteils: 90,7 Gew.-% 4,4'-, 9,0 Gew.-%, 2,4'- und 0,3 Gew.-% 2,2'-Diisocyanatodiphenylmethan). Die Viskosität (25°C) liegt bei 25 mPa.s.

Polyisocyanat 2:

Polyisocyanatgemisch der Diphenylmethanreihe bestehend aus 50 Gew.-% Diisocyanatodiphenylmethan-Isomeren und 50 Gew.-% an höherkernigen Polyisocyanaten der Diphenylmethanreihe (Zusammensetzung des Diisocyanat-Anteils: 95,8 Gew.-% 4,4'-, 4,0 Gew.-% 2,4'-, 0,2 Gew.-% 2,2'-Diisocyantodiphenylmethan). Die Viskosität (25°C) liegt bei 190 mPas.

Polyisocyanat 3:

Polyisocyanatgemisch der Diphenylmethanreihe bestehend aus 44 Gew.-% Diisocyanatdiphenylmethan-Isomeren und 56 Gew.-% an höherkernigen Polyisocyanaten der Diphenylmethanreihe (Zusammensetzung des Diisocyanat-Anteils: 94,5 Gew.-% 4,4'-, 5,2 Gew.-% 2,4'- und 0,2 Gew.-% 2,2'-Diisocyanatodiphenylmethan). Die Viskosität (25°C) liegt bei 420 mPa.s.

Polyethergemisch 1:

Polyethergemisch, hergestellt durch Propoxylierung eines Gemischs aus Glycerin und Stearylalkohol im Molverhältnis 1:1 unter Verwendung von 2,303 Mol Propylenoxyd pro Mol an reaktiven Wasserstoffatomen des Startergemisches.

| OH-Zahl (mg KOH/g): | 247 |
|---|---|
| Wassergehalt (Gew.-%): | 0,03 |
| Schmelzpunkt (°C): | 27-30 |
| mittlere Funktionalität: | 2 |
| mittleres Molekulargewicht: | ca. 450 |
| Gehalt an -R (Gew.-%): | 26 |

Polyethergemisch 2:

Polyethergemisch, hergestellt durch Alkoxylierung eines Gemisches aus Glycerin und Stearylalkohol im Molverhältnis 1:1 unter Verwendung eines Gemisches aus 1,729 Mol Propylenoxid und 0,75 Mol Ethylenoxid pro Mol an reaktiven Wasserstoffatomen des Startergemisches.

| OH-Zahl (mg KOH/g): | 252 |
|---|---|
| Wassergehalt (Gew.-%): | 0,04 |
| Schmelzpunkt (°C): | 36-38 |
| mittlere Funktionalität: | 2 |
| mittleres Molekulargewicht: | ca. 440 |
| Gehalt an -R (Gew.-%): | 26,6 |

Polyethergemisch 3:

Polyethergemisch, hergestellt durch Alkoxylierung eines Gemisches aus Glycerin und Dodecylalkohol im Molverhältnis 1:4,5 unter Verwendung von 1,727 Mol Propylenoxid pro Mol an aktiven Wasserstoffatomen des Startergemisches.

| OH-Zahl (mg KOH/g): | 242 |
|---|---|
| Wassergehalt (Gew.-%): | 0,01 |
| Viskosität (mPa.s/25°C): | 26 |
| mittlere Funktionalität: | 1,36 |
| mittleres Molekulargewicht: | ca. 310 |
| Gehalt an -R (Gew.-%): | 45 |

Polyethergemisch 4:

Polyethergemisch, hergestellt durch Alkoxylierung eines Gemisches aus Glycerin und Nonylalkohol im Molverhältnis 1:1 unter Verwendung eines Gemisches aus 2,862 Mol Propylenoxid und 1,258 Mol Ethylenoxid pro Mol an aktiven Wasserstoffatomen des Startergemisches.

| | |
|---|---|
| OH-Zahl (mg KOH/g): | 195 |
| Wassergehalt (Gew.-%): | 0,03 |
| Viskosität (mPa.s/25 °C): | 84 |
| mittlere Funktionalität: | 2 |
| mittleres Molekulargewicht: | ca. 570 |
| Gehalt an -R (Gew.-%): | 23 |

## Beispiel 1

In einem mit Rührer, Tropftrichter, Thermometer, Stickstoffzu- und ableitung versehenen Dreihalskolben werden 575 g Polyisocyanat 2 vorgelegt. Unter Rühren und Stickstoffatmosphäre werden anschließend bei 60 °C während eines Zeitraumes von 3 Stunden 25 g Polyethergemisch 1 zugetropft. Danach wird unter weiterem Rühren das Umsetzungsprodukt eine Stunde bei 60 °C gehalten und danach auf Raumtemperatur abgekühlt. Die Eigenschaften des resultierenden Umsetzungsproduktes sind in nachstehender Tabelle 1 zusammengefaßt.

## Beispiel 2

Entsprechend Beispiel 1 werden 760 g Polyisocyanat 2 mit 40 g Polyethergemisch 2 umgesetzt. 600 g des erhaltenen Produktes werden weiteren 400 g des Polyisocyanats 2 abgemischt. Die Eigenschaften des resultierenden Endproduktes sind in der nachstehenden Tabelle 1 zusammengefaßt.

## Beispiel 3

Entsprechend Beispiel 1 werden 442,5 g Polyisocyanat 2 mit 57,5 g Polyethergemisch 4 umgesetzt. Die Eigenschaften des resultierenden Endproduktes sind in Tabelle 1 zusammengefaßt.

## Beispiel 4

Entsprechend Beispiel 1 werden 900 g Polyisocyanat 1 mit 100 g des Polyethergemischs 3 umgesetzt. Die Eigenschaften des resultierenden Endproduktes sind in nachstehender Tabelle 1 zusammengefaßt.

Tabelle 1

| Produkteigenschaften | | |
|---|---|---|
| Substanz | Viskosität mPa.s (25 °C) | NCO-Gehalt Gew.-% |
| Beispiel 1 | 403 | 29,57 |
| Beispiel 2 | 397 | 29,7 |
| Beispiel 3 | 1316 | 26,62 |
| Beispiel 4 | 47 | 27,6 |
| Polyisocyanat 3 | 420 | 31,2 |

## Verwendungsbeispiele I - V

Die gemäß Beispielen 1 - 4 erhaltenen erfindungsgemäßen Polyisocyanatgemische und das Polyisocyanat 3 als Vergleichssubstanz werden zur Herstellung von Hartschaumprüfkörpern eingesetzt. Hierbei wird folgt verfahren:

## Ausgangsmaterialien

100 Gew.-Tle. eines Polyolgemisches der OH-Zahl 500 mit einer Viskosität bei 25 °C von 1000 mPa.s, bestehend aus:

1. 20 Gew.-Tln. eines Polyethers der OH-Zahl 470, hergestellt durch Propoxylierung von 2,3-Diaminotoluol und anschließende Ethoxylierung des Propoxylierungsproduktes (PO:EO-Gewichtsverhältnis = 1:1,25),
2. 40 Gew.-Teile eines Polyethers der OH-Zahl 415, hergestellt durch Propoxylierung eines Gemisches von 1 Mol Rohrzucker, 3,15 Mol Ethylenglykol, 2,45 Mol Propylenglykol und 0,13 Mol Wasser, 3. 25 Gew.-Tln. eines Polyethers der OH-Zahl 630, hergestellt durch Propoxylierung von Ethylendiamin,
4. 7 Gew.-Tln. Glycerin, und
5. 8 Gew.-Tln. Tris-(chlorisopropyl)phosphat,

1,5 Gew.-Tle. eines handelsüblichen Polyetherpolysiloxan-Schaumstabilisators (Tegostab B 8404 der Firma Goldschmidt AG, Essen),
1,3 Gew.-Tle. N,N-Dimethyl-cyclohexylamin als Katalysator,
2,0 Gew.-Tle. Wasser als Treibmittel,
12 Gew.-Tle. Chlordifluormethan als weiteres Treibmittel,
165 - 194 Gew.-Tle. des Polyisocyanats oder des Polyisocyanatgemisches (jeweils entsprechend einer Isocyanat-Kennzahl von 110).

Das Gemisch aus Polyol, Flammschutzmittel, Stabilisator, Aktivator und Wasser wird jeweils einem Mehrkomponenten-Dosiermischaggregat zugeführt und mit Chlordifluormethan und Polyisocyanat in einem Mischkopf vermischt und sofort in eine allseits geschlossene Form eingetragen.

Die Mischung beginnt jeweils sofort aufzuschäumen. Sie bindet jeweils nach ca. 30 sec. ab. Nach 15 min wird das Formteil (100 x 100 x 7 cm) entformt. Das Formteil hat eine allseitig geschlossene Deckschicht und einen zelligen Kern.

Die Beurteilung der Formteile und ihre Eigenschaften sind in nachfolgender Tabelle 2 aufgeführt. Das Verwendungsbeispiel V ist ein Vergleichsbeispiel unter Verwendung von unmodifiziertem Polyisocyanat 3, das bezüglich seiner Kenndaten weitgehend dem erfindungsgemäßen Polyisocyanatgemisch gemäß Beispiel 1 entspricht.

Wie aus Tabelle 2 ersichtlich, bestehen deutliche Unterschiede bezüglich der physikalischen Eigenschaften der Polyurethan-Hartschaumstoffe. Die mit den erfindungsgemäßen Polyisocyanatgemischen gemäß Beispielen 1 - 4 erhaltenen Schaumstoffe sind dem mit Polyisocyanat 3 hergestellten Vergleichsschaumstoff bezüglich ihrer physikalischen Eigenschaften überlegen. Insbesondere die Zellgröße der erfindungsgemäßen Schaumstoffe ist deutlich kleiner als diejenige des Vergleichsprodukts.

Die Eigenschaften der Schaumstoffe und die Löslichkeit von Chlordifluormethan bei 25°C in den eingesetzten Polyisocyanaten sind in nachstehender Tabelle 2 zusammengefaßt.

Tabelle 2

| Verwendungsbeispiel | I gemäß Bsp.1 (175) | II gemäß Bsp.2 (174) | III gemäß Bsp.3 (194) | IV gemäß Bsp.4 (187) | V Polyisocyant 3 (165) |
|---|---|---|---|---|---|
| Polyisocyanat (Gew.-Tle.) | 2,26 | 2,31 | 2,17 | 2,19 | 1,94 |
| Löslichkeit von Chlordifluormethan (g) in 100 g Polyisocyanat | 0,022 | 0,015 | 0,027 | 0,029 | 0,039 |
| mittlere Zellgröße, Stereoscan-Aufnahmen ($mm^2$) | 8 | 7 | - | - | 15 |
| Offenzelligkeit, ASTM D 2856-70 nicht korrigiert (%) | | | | | |
| max. Dimensionsänderung nach Lagerung (Vol-%): | | | | | |
| 24 h, -30°C, DIN 53 431 | +0,1 | +0,1 | +0,1 | -0,1 | +0,2 |
| 24 h, +100°C, DIN 53 431 | -1,1 | -0,7 | -0,5 | +0,8 | -0,9 |
| 24 h, +70°C, 95% r.F., ASTM 2126 F. | +0,8 | +0,6 | +0,8 | +0,6 | +1,0 |
| 7 d, +70°C, 95% r.F., ASTM 2126 F. | +0,4 | +0,4 | +0,6 | +0,5 | +0,6 |

**Patentansprüche**

1. Flüssige Urethangruppen enthaltende Polyisocyanate mit einem NCO-Gehalt von 25 bis 33 Gew.-% und einer Viskosität von 100 bis 3000 mPa.s bei 25° C, erhalten durch Umsetzung von

a1) Polyisocyanaten oder Polyisocyanatgemischen der Diphenylmethan-Reihe mit einem Gehalt an Diisocyanatdiphenylmethan-Isomeren von 30 bis 100 Gew.-%

mit

b) mindestens einem Alkohol in einem Mengenverhältnis von a1) und b) entsprechend einem NCO/OH-Äquivalentverhältnis von 1 : 0,01 bis 1 : 0,5 und bei Temperaturen von 40 - 180° C und ohne Katalysatoren

und gegebenenfalls anschließende Abmischung des aus den Komponenten a1) und b) erhaltenen Umsetzungsproduktes bei Raumtemperatur mit

a2) urethangruppenfreien Polyisocyanaten oder Polyisocyanatgemischen der Diphenylmethanreihe mit einem Gehalt an Diisocyanatodiphenylmethan-Isomeren von 30 bis 100 Gew.-%,

mit dar Maßgabe, daß der Gehalt der Komponenten a1) und a2) an Diisocyantodiphenylmethan-Isomeren Insgesamt bei 30 bis 90 Gew.-% und der Gehalt der beiden Ausgangskomponenten an höher als difunktionellen Polyisocyanaten der Diphenylmethanreihe insgesamt bei 10 bis 70 Gew.-% liegt, dadurch gekennzeichnet, daß die Komponente b) aus

b1) Alkoxylierungsprodukten von Alkoholen der Formel

R-OH

und/oder

b2) Alkoxylierungsprodukten von Aminen der Formel

R-NH$_2$

und/oder

b3) Alkoxylierungsprodukten von Amiden der Formel

R-CO-NH$_2$

und gegebenenfalls zusätzlich

b4) keine hydrophoben Kohlenwasserstoffreste -R aufweisenden Alkoxylierungsprodukten von ein- oder mehrfunktionellen Startermolekülen des Molekulargewichtsbereichs 18 bis 342

besteht, wobei

(i) die in den Komponenten b1), b2) und b3) vorliegenden Reste R gleich oder verschieden sind und für gegebenenfalls olefinisch ungesättigte aliphatische Kohlenwasserstoffreste mit 8 bis 24 Kohlenstoffatomen stehen,

(ii) bei der Herstellung der Alkoxylierungsprodukte pro Mol an aktiven Wasserstoffatomen der Startermoleküle mindestens 1 Mol Alkylenoxid zur Anwendung gelangt,

(iii) das mittlere Molekulargewicht $M_n$ der Komponente b) bei 188 bis 1200 liegt,

(iv) Art und Mengenverhältnisse der Komponenten b1) bis b4) im übrigen so gewählt werden, daß in der Komponente b) der Gewichtsanteil der hydrophoben Reste -R 5 bis 82 Gew.-% ausmacht und

(v) Art und Mengenverhältnisse der Komponenten b1) bis b4) so gewählt werden, daß die Komponente b eine mittlere Funktionalität von mindestens 1,3, vorzugsweise 1,5 - 5 aufweist.

2. Polyisocyanatgemische gemäß Anspruch 1, dadurch gekennzeichnet, daß sich die Diisocyanatodiphenylmethan-Isomeren mindestens einer der Komponenten a1) oder a2) aus 60 -99,5 Gew.-% 4,4'-Diisocyanatodiphenylmethan, 0,5 -40 Gew.-% 2,4'-Diisocyanatodiphenylmethan und 0 -3 Gew.-% 2,2'-Diisocyanatodiphenylmethan zusammensetzen, wobei sich die genannten Prozentsätze zu 100 ergänzen, mit der Maßgabe, daß der Gesamtgehalt der Komponenten a1) und a2) an 2,4'-Diisocyanatodiphenylmethan, bezogen auf den Gesamtgehalt an Diisocyanatodiphenylmethan-Isomeren, bei 0,5 -25 Gew.-% liegt.

3. Verfahren zur Herstellung von flüssigen, Urethangruppen enthaltenden Polyisocyanatgemischen gemäß Anspruch 1 durch Umsetzung von

a1) Polyisocyanaten oder Polyisocyanatgemischen der Diphenylmethan-Reihe mit einem Gehalt an Diisocyanatdiphenylmethan-Isomeren von 30 bis 100 Gew.-%.

mit

b) mindestens einem Alkohol in einem Mengenverhältnis von a1) und b) entsprechend einem NCO/OH-Äquivalentverhältnis von 1 : 0,01 bis 1 : 0,5 und bei Temperaturen von 40 - 180° C und ohne Katalysatoren

und gegebenenfalls anschließende Abmischung des aus den Komponenten a1) und b) erhaltenen Umsetzungsproduktes bei Raumtemperatur mit

a2) urethangruppenfreien Polyisocyanaten oder Polyisocyanatgemischen der Diphenylmethanreihe mit einem Gehalt an Diisocyanatodiphenylmethan-Isomeren von 30 bis 100 Gew.-%,

mit der Maßgabe, daß der Gehalt der Komponenten a1) und a2) an Diisocyantodiphenylmethan-Isomeren insgesamt bei 30 bis 90 Gew.-% und der Gehalt der beiden Ausgangskomponenten an höher als difunktionellen Polyisocyanaten der Diphenylmethanreihe insgesamt bei 10 bis 70 Gew.-% liegt, dadurch gekennzeichnet, daß die Komponente b) aus

b1) Alkoxylierungsprodukten von Alkoholen der Formel

R-OH

und/oder

b2) Alkoxylierungsprodukten von Aminen der Formel

R-NH$_2$

und/oder

b3) Alkoxylierungsprodukten von Amiden der Formel

R-CO-NH$_2$

und gegebenenfalls zusätzlich

b4) keine hydrophoben Kohlenwasserstoffreste -R aufweisenden Alkoxylierungsprodukten von ein- oder mehrfunktionellen Startermolekülen des Molekulargewichtsbereichs 18 bis 342

besteht, wobei

(i) die in den Komponenten b1), b2) und b3) vorliegenden Reste R gleich oder verschieden sind und für gegebenenfalls olefinisch ungesättigte aliphatische Kohlenwasserstoffreste mit 8 bis 24 Kohlenstoffatomen stehen,

(ii) bei der Herstellung der Alkoxylierungsprodukte pro Mol an aktiven Wasserstoffatomen der Startermoleküle mindestens 1 Mol Alkylenoxid zur Anwendung gelangt,

(iii) das mittlere Molekulargewicht M$_n$ der Komponente b) bei 188 bis 1200 liegt,

(iv) Art und Mengenverhältnisse der Komponenten b1) bis b4) im übrigen so gewählt werden, daß in der Komponente b) der Gewichtsanteil der hydrophoben Reste -R 5 bis 82 Gew.-% ausmacht und

(v) Art und Mengenverhältnisse der Komponenten b1) bis b4) so gewählt werden, daß die Komponente b eine mittlere Funktionalität von mindestens 1,3, vorzugsweise 1,5 - 5 aufweist.

4. Verfahren gemäß Anspruch 3, dadurch gekennzeichnet, daß sich die Diisocyanatodiphenylmethan-Isomeren mindestens einer der Komponenten a1) oder a2) aus 60 -99,5 Gew.-% 4,4'-Diisocyanatodiphenylmethan, 0,5 -40 Gew.-% 2,4'-Diisocyanatodiphenylmethan und 0 -3 Gew.-% 2,2'-Diisocyanatodiphenylmethan zusammensetzen, wobei sich die genannten Prozentsätze zu 100 ergänzen, mit der Maßgabe, daß der Gesamtgehalt der Komponenten a1) und a2) an 2,4'-Diisocyanatodiphenylmethan, bezogen auf den Gesamtgehalt an Diisocyanatodiphenylmethan-Isomeren, bei 0,5 -25 Gew.-% liegt.

5. Verwendung der Polyisocyanatgemische gemäß Anspruch 1 und 2 als Polyisocyanatkomponente bei der Herstellung von Polyurethanschaumstoffen.

6. Verwendung gemäß Anspruch 5 bei der Herstellung von Polyurethan-Hartschaumstoffen.

7. Verwendung gemäß Anspruch 5 bei der Herstellung von Polyurethan-Hartschaumstoffen unter gleichzeitiger Verwendung von teilhalogenierten Kohlenwasserstoffen und/oder niedrigsiedenden, aliphatischen Kohlenwasserstoffen als Treibmittel.

8. Verwendung gemäß Anspruch 5 bei der Herstellung von Polyurethan-Hartschaumstoffen unter gleichzeitiger Verwendung von Wasser als Treibmittel.

EP 0 415 159 B1

**9.** Verwendung gemäß Anspruch 7 bei der Herstellung von Polyurethan-Hartschaumstoffen unter gleichzeitiger Verwendung von Wasser als Treibmittel.

**10.** Verwendung gemäß Anspruch 7, gekennzeichnet durch die Verwendung von Monochlordifluormethan als Treibmittel.

**Claims**

**1.** Liquid urethane-modified polyisocyanates having an NCO content of 25 to 33% by weight and a viscosity of 100 to 3000 mPa.s at 25°C obtained by reaction of

a1) polyisocyanates or polyisocyanate mixtures of the diphenyl methane series having a content of diisocyanatodiphenyl methane isomers of 30 to 100% by weight with

b) at least one alcohol in a quantitative ratio of a1) to b) corresponding to an NCO/OH equivalent ratio of 1:0.01 to 1:0.5, at temperatures of 40 to 180°C and in the absence of catalysts

and optionally subsequent mixing of the reaction product obtained from components a1) and b) with

a2) polyisocyanates or polyisocyanate mixtures of the diphenyl methane series free from urethane groups with a content of diisocyanatodiphenyl methane isomers of 30 to 100% by weight,

with the proviso that the total content of diisocyanatodiphenyl methane isomers in components a1) and a2) is from 30 to 90% by weight and the total content of higher than difunctional polyisocyanates of the diphenyl methane series in the two starting components is from 10 to 70% by weight, characterized in that component b) consists of

b1) alkoxylation products of alcohols corresponding to the following formula

R-OH

and/or

b2) alkoxylation products of amines corresponding to the following formula

$R-NH_2$

and/or

b3) alkoxylation products of amides corresponding to the following formula

$R-CO-NH_2$

and, optionally,

b4) alkoxylation products with no hydrophobic hydrocarbon radicals -R of monofunctional or polyfunctional starter molecules having a molecular weight in the range from 18 to 342,

(i) the substituents R in components b1), b2) and b3) being the same or different and representing optionally olefinically unsaturated aliphatic hydrocarbon radicals containing 8 to 24 carbon atoms,

(ii) at least one mol alkylene oxide being used per mol active hydrogen atoms of the starter molecule in the preparation of the alkoxylation products,

(iii) the average molecular weight $M_n$ of component b) being from 188 to 1,200,

(iv) the type of and quantitative ratios between components b1) to b4) being selected so that the percentage by weight of the hydrophobic radicals -R in component b) is from 5 to 82% by weight and

(v) the type of and quantitative ratios between components b1) to b4) being selected so that component b has an average functionality of at least 1.3 and preferably 1.5 to 5.

**2.** Polyisocyanate mixtures as claimed in claim 1, characterized in that the diisocyanatodiphenyl methane isomers of at least one of components a1) or a2) consists of 60 to 99.5% by weight of 4,4'-diisocyanatodiphenyl methane, 0.5 to 40% by weight of 2,4'-diisocyanatodiphenyl methane and 0 to 3% by weight of 2,2'-diisocyanatodiphenyl methane, the percentages shown adding up to 100, with the proviso that the total content of 2,4'-diisocyanatodiphenyl methane in components a1) and a2) is from 0.5 to 25% by weight, based on the total content of diisocyanatodiphenyl methane isomers.

13

EP 0 415 159 B1

3. A process for the production of the liquid urethane-modified polyisocyanates claimed in claim 1 by reaction of

a1) polyisocyanates or polyisocyanate mixtures of the diphenyl methane series having a content of diisocyanatodiphenyl methane isomers of 30 to 100% by weight with

b) at least one alcohol in a quantitative ratio of a1) to b) corresponding to an NCO/OH equivalent ratio of 1:0.01 to 1:0.5, at temperatures of 40 to 180°C and in the absence of catalysts

and optionally subsequent mixing of the reaction product obtained from components a1) and b) with

a2) polyisocyanates or polyisocyanate mixtures of the diphenyl methane series free from urethane groups with a content of diisocyanatodiphenyl methane isomers of 30 to 100% by weight,

with the proviso that the total content of diisocyanatodiphenyl methane isomers in components a1) and a2) is from 30 to 90% by weight and the total content of higher than difunctional polyisocyanates of the diphenyl methane series in the two starting components is from 10 to 70% by weight, characterized in that component b) consists of

b1) alkoxylation products of alcohols corresponding to the following formula

R-OH

and/or

b2) alkoxylation products of amines corresponding to the following formula

$R-NH_2$

and/or

b3) alkoxylation products of amides corresponding to the following formula

$R-CO-NH_2$

and, otpionally,

b4) alkoxylation products with no hydrophobic hydrocarbon radicals -R of monofunctional or polyfunctional starter molecules having a molecular weight in the range from 18 to 342,

(i) the substituents R in components b1), b2) and b3) being the same or different and representing optionally olefinically unsaturated aliphatic hydrocarbon radicals containing 8 to 24 carbon atoms,

(ii) at least one mol alkylene oxide being used per mol active hydrogen atoms of the starter molecule in the preparation of the alkoxylation products,

(iii) the average molecular weight $M_n$ of component b) being from 188 to 1,200,

(iv) the type of and quantitative ratios between components b1) to b4) being selected so that the percentage by weight of the hydrophobic radicals -R in component b) is from 5 to 82% by weight and

(v) the type of and quantitative ratios between components b1) to b4) being selected so that component b has an average functionality of at least 1.3 and preferably 1.5 to 5.

4. A process as claimed in claim 3, characterized in that the diisocyanatodiphenyl methane isomers of at least one of components a1) or a2) consists of 60 to 99.5% by weight of 4,4'-diisocyanatodiphenyl methane, 0.5 to 40% by weight of 2,4'-diisocyanatodiphenyl methane and 0 to 3% by weight of 2,2'-diisocyanatodiphenyl methane, the percentages shown adding up to 100, with the proviso that the total content of 2,4'-diisocyanatodiphenyl methane in components a1) and a2) is from 0.5 to 25% by weight, based on the total content of diisocyanatodiphenyl methane isomers.

5. The use of the polyisocyanate mixtures claimed in claims 1 and 2 as polyisocyanate component in the production of polyurethane foams.

6. The use claimed in claim 5 in the production of rigid polyurethane foams.

7. The use claimed in claim 5 in the production of rigid polyurethane foams using partly halogenated hydrocarbons and/or low-boiling aliphatic hydrocarbons as blowing agents.

8. The use claimed in claim 5 in the production of rigid polyurethane foams using water as blowing agent.

14

**9.** The use claimed in claim 7 in the production of rigid polyurethane foams using water as blowing agent.

**10.** The use claimed in claim 7, characterized by the use of monochlorodifluoromethane as blowing agent.

**Revendications**

**1.** Polyisocyanates liquides contenant des groupes uréthanne, ayant une teneur NCO de 25 à 33% en poids et une viscosité de 100 à 3.000 mPa.s à 25°C, que l'on obtient par mise en réaction

a1) de polyisocyanates ou de mélanges de polyisocyanates de la série des diphénylméthanes ayant une teneur en isomères du diisocyanatodiphénylmethane de 30 à 100% en poids

avec

b) au moins un alcool dans une proportion de a1) et b) correspondant à un rapport d'équivalent NCO/OH de 1:0,01 à 1:0,5, et à des températures de 40-180°C, et sans catalyseurs

et éventuellement par mélange ultérieur du produit réactionnel obtenu à partir des composants a1) et b), à la température ambiante, avec

a2) des polyisocyanates ou des mélanges de polyisocyanates exempts de groupes uréthanne de la série des diphénylméthanes ayant une teneur en isomères du diisocyanatodiphénylméthane de 30 à 100% en poids,

avec cette mesure que la teneur des composants a1) et a2) en isomères du diisocyanatodiphénylméthane se situe globalement de 30 à 90% en poids et la teneur des deux composants de départ en polyisocyanates plus que difonctionnels de la série des diphénylméthanes se situe globalement de 10 à 70% en poids, caractérisés en ce que le composant b) est constitué par

b1) des produits d'alcoxylation d'alcools de formule

R-OH

et/ou

b2) des produits d'alcoxylation d'amines de formule

R-NH$_2$

et/ou

b3) des produits d'alcoxylation d'amides de formule

R-CO-NH$_2$

et éventuellement, en outre

b4) des produits d'alcoxylation ne présentant pas de radicaux d'hydrocarbures hydrophobes -R de molécules d'amorçage mono- ou polyfonctionnelles ayant un poids moléculaire de 18 à 342,

dans lesquels

(i) les radicaux R présents dans les composants b1), b2) et b3) sont identiques ou différents et représentent des radicaux d'hydrocarbures aliphatiques présentant éventuellement une insaturation oléfinique et contenant de 8 à 24 atomes de carbone,

(ii) lors de la préparation des produits d'alcoxylation, on utilise, par mole d'atomes d'hydrogène actif des molécules d'amorçage, au moins 1 mole d'oxyde d'alkylène,

(iii) le poids moléculaire moyen $M_n$ du composant b) se situe de 188 à 1200,

(iv) on choisit le type et la proportion des composants b1) à b4), par ailleurs, de telle sorte que, dans le composant b), la fraction pondérale des radicaux hydrophobes -R représente de 5 à 82% en poids, et

(v) on choisit le type et les proportions des composants b1) à b4) de telle sorte que le composant b) présente une fonctionnalité moyenne d'au moins 1,3, de préférence de 1,5-5.

**2.** Mélanges de polyisocyanates selon la revendication 1, caractérisés en ce que les isomères du diisocyanatodiphénylméthane d'au moins un des composants a1) ou a2) se composent de 60 à 99,5% en poids de 4,4'-diisocyanatodiphénylméthane, de 0,5 à 40% en poids de 2,4'-diisocyanatodiphénylméthane et de 0 à 3% en poids de 2,2'-diisocyanatodiphénylméthane, les pourcentages mentionnés se complétant pour donner 100, avec cette mesure que la teneur totale des composants a1) et a2) en 2,4'-diisocyanatodiphénylméthane, rapportée à la teneur totale en isomères du diisocyanatodiphénylméthane, se situe de 0,5 à 25% en poids.

3. Procédé pour la préparation de mélanges de polyisocyanates liquides contenant des groupes uréthanne selon la revendication 1, par mise en réaction

    a1) de polyisocyanates ou de mélanges de polyisocyanates de la série des diphénylméthanes ayant une teneur en isomères du diisocyanatodiphénylméthane de 30 à 100% en poids

    avec

    b) au moins un alcool dans une proportion de a1) et b) correspondant à un rapport d'équivalent NCO/OH de 1:0,01 à 1:0,5, à des températures de 40-180°C, et sans catalyseurs

et éventuellement par mélange ultérieur du produit réactionnel obtenu à partir des composants a1) et b), à la température ambiante, avec

    a2) des polyisocyanates ou des mélanges de polyisocyanates exempts de groupes uréthanne de la série des diphénylméthanes ayant une teneur en isomères du diisocyanatodiphénylméthane de 30 à 100% en poids,

avec cette mesure que la teneur des composants a1) et a2) en isomères du diisocyanatodiphénylméthane se situe globalement de 30 à 90% en poids et la teneur des deux composants de départ en polyisocyanates plus que difonctionnels de la série des diphénylméthanes se situe globalement de 10 à 70% en poids, caractérisé en ce que le composant b) est constitué par

    b1) des produits d'alcoxylation d'alcools de formule

    R-OH

    et/ou
    b2) des produits d'alcoxylation d'amines de formule

    $R-NH_2$

    et/ou
    b3) des produits d'alcoxylation d'amides de formule

    $R-CO-NH_2$

    et éventuellement, en outre
    b4) des produits d'alcoxylation ne présentant pas de radicaux d'hydrocarbures hydrophobes -R de molécules d'amorçage mono- ou polyfonctionnelles ayant un poids moléculaire de 18 à 342,

dans lesquels

    (i) les radicaux R présents dans les composants b1), b2) et b3) sont identiques ou différents et représentent des radicaux d'hydrocarbures aliphatiques présentant éventuellement une insaturation oléfinique et contenant de 8 à 24 atomes de carbone,

    (ii) lors de la préparation des produits d'alcoxylation, on utilise, par mole d'atomes d'hydrogène actif des molécules d'amorçage, au moins 1 mole d'oxyde d'alkylène,

    (iii) le poids moléculaire moyen $M_n$ du composant b) se situe de 188 à 1200,

    (iv) on choisit le type et la proportion des composants b1) à b4), par ailleurs, de telle sorte que, dans le composant b), la fraction pondérale des radicaux hydrophobes -R représente de 5 à 82% en poids, et

    (v) on choisit le type et les proportions des composants b1) à b4) de telle sorte que le composant b) présente une fonctionnalité moyenne d'au moins 1,3, de préférence de 1,5-5.

4. Procédé selon la revendication 3, caractérisé en ce que les isomères du diisocyanato-diphénylméthane d'au moins un des composants a1) ou a2) se composent de 60-99,5% en poids de 4,4'-diisocyanatodiphénylméthane, de 0,5 à 40% en poids de 2,4'-diisocyanatodiphénylméthane et de 0 à 3% en poids de 2,2'-diisocyanatodiphénylméthane, les pourcentages mentionnés se complétant pour donner 100, avec cette mesure que la teneur totale des composants a1) et a2) en 2,4'-diisocyanato-diphénylméthane, rapportée à la teneur totale en isomères du diisocyanatodiphénylméthane, se situe de 0,5 à 25% en poids.

5. Utilisation des mélanges de polyisocyanates selon les revendications 1 et 2, comme composant de polyisocyanate, lors de la préparation de mousses de polyuréthanne.

6. Utilisation selon la revendication 5, lors de la préparation de mousses dures de polyuréthanne.

7. Utilisation selon la revendication 5, dans la préparation de mousses dures de polyuréthanne avec utilisation simultanée d'hydrocarbures partiellement halogénés et/ou d'hydrocarbures aliphatiques à bas point d'ébullition comme agent moussant.

8. Utilisation selon la revendication 5, lors de la préparation de mousses dures de polyuréthanne avec utilisation simultanée d'eau comme agent moussant.

9. Utilisation selon la revendication 7, dans la préparation de mousses dures de polyuréthanne avec utilisation simultanée d'eau comme agent moussant.

10. Utilisation selon la revendication 7, caractérisée par l'utilisation du monochlorodifluorométhane comme agent moussant.